# EUROPÄISCHE PATENTSCHRIFT

(11) **EP 4 036 382 B1**
(45) Veröffentlichungstag und Bekanntmachung des Hinweises auf die Patenterteilung: **04.09.2024**
(21) Anmeldenummer: 21210088.7
(22) Anmeldetag: 24.11.2021
(51) Int. Cl.: F01K 25/04, F01K 25/06

(54) **NUTZUNG EINER WÄRMEQUELLE ZUR STROMERZEUGUNG UND LUFTFAHRZEUG MIT KÜHLSYSTEM**
USE OF A HEAT SOURCE FOR POWER GENERATION AND AIRCRAFT WITH COOLING SYSTEM
UTILISATION D'UNE SOURCE DE CHALEUR POUR LA PRODUCTION DE COURANT ET AÉRONEF POURVU DE SYSTÈME DE REFROIDISSEMENT

(30) Priorität: 28.01.2021 DE 102021101987
(43) Veröffentlichungstag der Anmeldung: 03.08.2022
(73) Patentinhaber: Airbus Operations GmbH, 21129 Hamburg (DE); Airbus Defence and Space GmbH, 82024 Taufkirchen (DE)
(72) Erfinder: Piesker, Markus, 21129 Hamburg (DE); Lohmiller, Winfried, 82024 Taufkirchen (DE)
(74) Vertreter: Schornack, Oliver

(56) Entgegenhaltungen:
- WO-A1-2007/000811
- JP-A- H10 205 308
- US-A- 3 603 087
- US-A1- 2003 150 403
- US-A1- 2020 149 790

## Beschreibung

Die Erfindung betrifft ein Kühlsystem für ein zweiphasiges Kältemittel mit integrierter Stromerzeugung und ein Luftfahrzeug mit solch einem Kühlsystem. Insbesondere betrifft die Erfindung ein Kühlsystem für eine Wärmequelle mit einem Expander, der gasförmiges, überhitztes Kältemittel aus einem Sammelbehälter, der Kältemittel eines Verdampfers sammelt, nutzt, um einen Generator anzutreiben, und ein Luftfahrzeug mit solch einem Kühlsystem.

In der nachfolgenden Beschreibung und den beigefügten Ansprüchen wird unter einem "zweiphasigen Kältemittel" ein Medium (Fluid) bezeichnet, das beim Kältetransport oder Wärmetransport seinen Aggregatszustand ändert. In der Regel wird gasförmiges Kältemittel in einem Kondensator abgekühlt und geht dabei in den flüssigen Zustand über. Durch Wärmeaustausch mit einem zu kühlenden Gegenstand oder Medium kann das flüssige Kältemittel verdampfen und den zu kühlenden Gegenstand oder Medium abkühlen, indem es ihm die zur Verdampfung des Kältemittels notwendige Energie (Verdampfungsenthalpie) entzieht.

In Flugzeugen kommen vermehrt Brennstoffzellen zum Einsatz, um elektrischen Strom in dem Flugzeug zur Verfügung zu stellen. Insbesondere in Luftfahrzeugen, die in einer Höhe zwischen 15 km und 25 km fliegen, wie zum Beispiel ein Pseudosatellit (High Altitude Pseudo Satellite - HAPS), wird elektrischer Strom für den Antrieb des Luftfahrzeugs verwendet. Dieser wird tagsüber durch Solarzellen hergestellt, zum Antrieb verwendet und übrige Energie chemisch gespeichert. Zum Beispiel wird der erzeugte elektrische Strom in einem Elektrolyseur zur Spaltung von Wasser verwendet. Um das Luftfahrzeug auch nachts antreiben zu können, wird in einer Brennstoffzelle die chemisch gespeicherte Energie in elektrische Energie umgewandelt. Zum Beispiel kann die Brennstoffzelle durch die Reaktion aus Wasserstoff und Sauerstoff, der getrennt gespeichert ist, Wasser und elektrischen Strom erzeugen. Die Kombination dieser abwechselnden Stromspeicherung und Stromerzeugung wird auch als regeneratives Brennstoffzellensystem bezeichnet.

Da diese hochfliegenden Luftfahrzeuge konzipiert sind, um mehrere Tage, Wochen oder sogar Monate zu fliegen, ist ein möglichst geringes Gewicht wichtig.

Ferner sind in solchen Flugzeugen, und auch anderen Vorrichtungen, Wärme erzeugende Komponenten vorhanden, die während des Betriebs gekühlt werden müssen. Diese überschüssige Wärme wird jedoch oft nur an die Umgebung abgegeben.

Die US 3,603,087 betrifft einen Heizkreislauf in einem (elektrischen) Kraftwerk, wobei Heißdampf (Wasser) mit Schmiermittel gemischt gefördert werden, und nach einem Erhitzen getrennt werden. Dabei wird das gemischte Fluid zunächst so stark erhitzt, dass sich das Wasser vollständig zu Wasserdampf wandelt (467 °F), während das Schmiermittel im flüssigen Zustand verbleibt. Nach einer Trennung der beiden Fluide wird der Wasserdampf überhitzt (1200 °F), um die Maschine zur Stromerzeugung anzutreiben. Nach dem Verlassen eines Kondensators wird das kondensiert Wasser wieder mit dem Schmiermittel vermischt und erneut durch den Kreislauf gefördert.

Die WO 2007/000811 A1, JP H10 205308 A und US 2003/150403 A1 betreffen ebenfalls Heiz- und Kühlkreisläufe.

Der Erfindung liegt daher die Aufgabe zugrunde, ein Kühlsystem und ein zugehöriges Luftfahrzeug bereitzustellen, das energieeffizient arbeitet und dennoch ein geringes Gewicht aufweist.

Diese Aufgabe wird durch ein Kühlsystem mit den Merkmalen des Anspruchs 1 sowie ein Luftfahrzeug mit den Merkmalen des Anspruchs 11 gelöst.

Gemäß einem ersten Aspekt zum besseren Verständnis der vorliegenden Offenbarung umfasst ein Kühlsystem mit einem zweiphasigen Kältemittel einen Kondensator, der dazu eingerichtet ist, das zweiphasige Kältemittel zu kühlen und gasförmiges Kältemittel in flüssiges Kältemittel zu überführen, und einen Verdampfer, der in einer Wärmequelle integriert ist oder mit dieser thermisch gekoppelt ist und dazu eingerichtet ist, das zweiphasige Kältemittel zu erwärmen, wobei zumindest ein Teil des Kältemittels zu gasförmigem Kältemittel verdampft. Das Kühlsystem umfasst ferner eine Fördereinrichtung, die dazu eingerichtet ist, das zweiphasige Kältemittel von dem Kondensator zu dem Verdampfer zu fördern.

Abwärme der Wärmequelle wird somit von dem Kältemittel aufgenommen und durch das Kühlsystem abtransportiert. Mit anderen Worten erfolgt ein Wärmeaustausch mit der zu kühlenden Einrichtung (Bauteil oder anderen Komponente) oder einem von der Wärmequelle erwärmten Medium in dem Verdampfer, wobei insbesondere die Verdampfungsenthalpie des Kältemittels der Aufnahme der Wärmeenergie in das Kältemittel dient.

In der vorliegenden Offenbarung wird zur Gewichtsreduzierung des Kühlsystems möglichst auf einen flüssigen Kälteträger verzichtet. Daher wird ein zweiphasiges Kältemittel eingesetzt, wobei das Kältemittel in dem Verdampfer zumindest teilweise in den gasförmigen Aggregatszustand übergeht. Das Kühlsystem wird dadurch insgesamt leichter gegenüber einem System mit ausschließlich flüssigem Kälteträger. Zum Beispiel muss das Kühlsystem lediglich in einem Bereich zwischen Ausgang des Kondensators und Eingang des Verdampfers für ausschließlich flüssiges Kältemittel konzipiert sein, während andere Abschnitte des Kühlsystems für gasförmiges Kältemittel ausgelegt sind. Gegenüber herkömmlichen rein flüssig betriebenen Kühlkreisläufen entfällt im Bereich von gasförmigem Kältemittel das Gewicht des flüssigen Kältemittels, und im Bereich von flüssigem Kältemittel können Kältemittelleitungen kleiner und damit leichter ausgestaltet sein, da insgesamt weniger flüssiges Kältemittel benötigt wird.

Der Kondensator kann mit einer Wärmesenke thermisch gekoppelt sein, beispielsweise kann der Kondensator von einem kalten Fluid (Gas oder Flüssigkeit) durchströmt werden, welches Wärme aufnimmt und das Kältemittel in dem Kondensator kühlt und dabei gasförmiges Kältemittel in den flüssigen Zustand überführt.

Das Kühlsystem umfasst zudem einen Generator, der dazu eingerichtet ist, Strom zu erzeugen, und einen Expander, der stromabwärts des Verdampfers mit dem Verdampfer fluidisch verbunden ist und dazu eingerichtet ist, das gasförmige Kältemittel aus dem Verdampfer zu entspannen, mechanische Energie zu gewinnen und den Generator anzutreiben. Das Kühlsystem ermöglicht somit eine Energierückgewinnung aus der Abwärme der Wärmequelle, die ansonsten an die Wärmesenke des Kondensators abgegeben würde. Insbesondere, wenn der Wärmequelle mithilfe der Verdampfungsenthalpie des Kältemittels Wärmeenergie entzogen wird, lässt sich diese Wärmeenergie durch den Expander und Generator in elektrischen Strom umwandeln und energetisch nutzen.

Bei dem Expander kann es sich beispielsweise um eine Turbine handeln, die von dem gasförmigen Kältemittel angetrieben wird. In dem Kühlsystem liegt das gasförmige Kältemittel unter einem höheren Druck vor als das flüssige Kältemittel, insbesondere das flüssige Kältemittel stromabwärts des Kondensators. Dieser höhere Druck kann zum Antreiben der Turbine und somit zur Energierückgewinnung in Form elektrischen Stroms genutzt werden.

Ferner umfasst das Kühlsystem einen ersten Sammelbehälter, der dazu eingerichtet ist, das flüssige und gasförmige Kältemittel aus dem Verdampfer zu sammeln, und eine erste Ableitung. Der erste Sammelbehälter dient der Trennung von gasförmigem und flüssigem Kältemittel, welches den Verdampfer verlässt. Die erste Ableitung ist dazu eingerichtet, das gasförmige Kältemittel aus dem ersten Sammelbehälter abzuleiten. Insbesondere verbindet die erste Ableitung den ersten Sammelbehälter mit dem Expander fluidisch.

Ferner umfasst das Kühlsystem ein erstes Regelventil, das dazu eingerichtet ist, eine Durchflussmenge des gasförmigen Kältemittels durch die erste Ableitung zu regeln.

Das Kühlsystem umfasst auch eine Steuerung, die dazu eingerichtet ist, das erste Regelventil so zu steuern, dass das dem Expander zugeführte gasförmige Kältemittel überhitzt ist, indem die Steuerung einen Druck des gasförmigen Kältemittels in der ersten Ableitung stromabwärts des ersten Regelventils herstellt und aufrechterhält, der ein Kondensieren des gasförmigen Kältemittels verhindert.

Da dem Expander nur gasförmiges Kältemittel zugeführt wird, kann dieser eine einfachere Bauform aufweisen, da er nicht für Kältemittel in Tröpfchenform (teilweise flüssig) ausgelegt sein muss. Somit kann das Energierückgewinnungssystem möglichst leicht implementiert werden.

Insbesondere kann der Druck des gasförmigen Kältemittels in der ersten Ableitung gegenüber einem Druck stromaufwärts des ersten Regelventils (zum Beispiel in dem ersten Sammelbehälter) verringert werden. Auch dadurch wird eine Tröpfchenbildung im gasförmigen Kältemittel vermieden, wodurch der Aufbau des Expanders einfacher und somit leichter ist.

Hierbei ist die Steuerung insbesondere dazu eingerichtet, ein Überhitzen des Kältemittels zu gewährleisten, aber eine Druckdifferenz gegenüber einem Abschnitt des Kältemittels stromabwärts des Expanders möglichst groß zu halten. Die Verringerung des Drucks im gasförmigen Kältemittel zum Überhitzen soll eine möglichst geringe Verringerung der durch den Expander zu gewinnenden mechanischen Energie haben.

Alternativ oder zusätzlich kann das Kältemittel in der ersten Ableitung auch durch Zuführen von Wärmeenergie erhitzt werden. Hierfür kann jede zur Verfügung stehende beliebige Wärmequelle verwendet werden. Zum Beispiel kann das Kältemittel zwischen 5 K und 15 K, vorzugsweise um 10 K, oberhalb der Sidetemperatur (des Taupunkts) erwärmt werden, um ein ausreichendes Überhitzen des Kältemittels zu erzielen.

In einer Ausgestaltungsvariante kann der Sammelbehälter zum Beispiel kurz nach dem Verdampfer mit diesem fluidisch verbunden sein (eine kurze Kühlsystemleitung umfassen) oder in den Verdampfer integriert sein. Alternativ kann auch eine Kühlsystemleitung stromabwärts des Verdampfers eine Aufweitung aufweisen, die als Sammelbehälter dient.

Ferner kann die erste Ableitung in einem oberen Bereich des Sammelbehälters an diesen angeschlossen sein, um mittels Gravitation das nach oben strömende gasförmige Kältemittel vom flüssigen Kältemittel zu trennen und abzuleiten.

In einer Ausgestaltungsvariante kann das Kühlsystem ferner eine Brennstoffzelle umfassen, wobei der Verdampfer in der Brennstoffzelle integriert ist oder mit der Brennstoffzelle thermisch gekoppelt ist. Somit lässt sich die Abwärme der Brennstoffzelle durch den Expander und Generator zur Energierückgewinnung nutzen. Insbesondere kann mehr elektrischer Strom erzeugt werden als durch die Brennstoffzelle allein.

Bei der Brennstoffzelle kann es sich um eine reversible Brennstoffzelle handeln, also eine Brennstoffzelle, die sowohl Strom erzeugen als auch Strom zur chemischen Speicherung (Elektrolyse) einsetzen kann. Alternativ oder zusätzlich kann die Brennstoffzelle auch ein Elektrolyseur sein. Somit ist das Brennstoffzellenkühlsystem nicht auf eine Brennstoffzelle zur Stromerzeugung begrenzt, sondern kann auch nur für einen Elektrolyseur eingesetzt werden. Ebenfalls alternativ oder zusätzlich kann das Kühlsystem eine Brennstoffzelle und einen separat angeordneten Elektrolyseur kühlen. Hierbei können zum Beispiel die Brennstoffzelle und der Elektrolyseur jeweils einen Verdampfer darstellen, der wahlweise mit Kältemittel von der Fördereinrichtung versorgt wird, oder die Brennstoffzelle und der Elektrolyseur können eine gemeinsame thermische Kopplung mit dem Verdampfer aufweisen.

Zum Beispiel beim Einsatz in einem elektrisch angetriebenen Luftfahrzeug kann somit zusätzlicher elektrischer Strom gewonnen werden. Dies betrifft Phasen, in denen mittels Brennstoffzelle elektrischer Strom erzeugt wird, aber auch Phasen, in denen elektrischer Strom über andere Mittel (zum Beispiel Solarzellen) erzeugt wird und mittels Elektrolyseurs chemisch gespeichert wird.

Alternativ oder zusätzlich kann es sich bei der Wärmequelle um jede beliebige Einrichtung oder Komponente einer Vorrichtung handeln, die Abwärme produziert. Beispielsweise können elektrische Bauteile Abwärme erzeugen und eine Wärmequelle darstellen. Ferner kann der Verdampfer mit einer Batterie, einer elektronischen Komponente, einem elektrischen Motor und/oder einem Getriebe thermisch gekoppelt werden oder darin integriert werden, die ebenfalls durch das beschriebene Kühlsystem gekühlt werden können. Auch kann ein Verbrennungsmotor, eine Gasturbine, oder ähnliche Vorrichtung mit einer hohen Abwärmelast, sowie deren Abgase, etc. mit dem Kühlsystem gekühlt werden, wobei eine Energierückgewinnung durch den Expander und Generator erfolgt. Die Abwärme dieser Einrichtung/Komponente allein oder in Kombination mit der Abwärme einer Brennstoffzelle und/oder einem Elektrolyse kann zur zusätzlichen Stromerzeugung durch den Expander und Generator verwendet werden.

In noch einer weiteren Implementierungsvariante kann das Kühlsystem ferner eine zweite Ableitung umfassen, die den ersten Sammelbehälter mit einem stromabwärts des Kondensators liegenden Teil des Kühlsystems fluidisch verbindet und dazu eingerichtet ist, flüssiges Kältemittel aus dem ersten Sammelbehälter abzuleiten. Zum Beispiel kann die zweite Ableitung in einem unten liegenden Abschnitt des ersten Sammelbehälters an diesen angeschlossen sein, um mittels Gravitation das nach unten strömende flüssige Kältemittel abzuleiten.

Das durch die zweite Ableitung strömende flüssige Kältemittel bedarf keiner zusätzlichen Fördereinrichtung, wodurch das Energierückgewinnungssystem ebenfalls leicht aufgebaut sein kann und keine Energie für eine solche zusätzliche Fördereinrichtung benötigt. Aufgrund der Verbindung zwischen erstem Sammelbehälter (direkt oder kurz hinter dem Verdampfer) und dem stromabwärts des Kondensators liegenden Teil des Kühlsystems liegt eine Druckdifferenz zwischen Anfang und Ende der zweiten Ableitung vor. Durch diese Druckdifferenz wird das flüssige Kältemittel durch die zweite Ableitung in den stromabwärts des Kondensators liegenden Teil des Kühlsystems ohne zusätzliche Einrichtungen und/oder ohne Zuhilfenahme der Gravitation gedrückt bzw. befördert. Der Druck in dem stromabwärts des Kondensators liegenden Teil des Kühlsystems wird maßgeblich durch die Kühlung und Kondensation des Kältemittels in dem Kondensator bestimmt. Umgekehrt zu dem zunehmenden Druck in dem Verdampfer, fällt der Druck an der Ausgangsseite des Kondensators geringer aus als an dessen Eingangsseite.

Durch das erste Regelventil lässt sich zudem der Druck in dem ersten Sammelbehälter insbesondere so steuern, dass die Druckdifferenz zwischen erstem Sammelbehälter und dem stromabwärts des Kondensators liegenden Teil des Kühlsystems gebildet und aufrechterhalten wird.

In einer anderen Ausgestaltungsvariante kann das Kühlsystem ferner eine Zuleitung, die die Fördereinrichtung mit dem Verdampfer fluidisch verbindet, und ein zweites Regelventil, das in der Zuleitung angeordnet ist und dazu eingerichtet ist, eine Durchflussmenge des Kältemittels durch die Zuleitung zu regeln, umfassen. Die Steuerung kann dabei dazu eingerichtet sein, das zweite Regelventil so zu steuern, dass der Verdampfer im Nassverdampfungsverfahren betrieben wird. In der Zuleitung wird flüssiges Kältemittel von der Fördereinrichtung zu dem Verdampfer geleitet.

Mithilfe des zweiten Regelventils kann nun einerseits die Kältemittelmenge in den Verdampfer gesteuert werden, die zum Abtransport der dort anfallenden Wärmeenergie benötigt wird. Andererseits kann die Steuerung einen gewissen Überschuss an flüssigem Kältemittel in den Verdampfer leiten, sodass ein Nassverdampfungsverfahren darin stattfindet. Mit anderen Worten wird mehr flüssiges Kältemittel in den Verdampfer geleitet als durch die Wärmezufuhr von der Brennstoffzelle bzw. dem Elektrolyseur verdampft werden kann. Dieses Nassverdampfungsverfahren bedingt, dass in dem gesamten Verdampfer flüssiges Kältemittel vorhanden ist. Dies ermöglicht eine gleichmäßige Kühlwirkung entlang der Strömungsrichtung des Kältemittels und somit eine gleichmäßige Wärmeverteilung innerhalb des Verdampfers
Zum Beispiel arbeiten Brennstoffzellen und Elektrolyseure am effizientesten, wenn bestimmte Betriebsparameter eingehalten werden, insbesondere wenn eine bestimmte Betriebstemperatur gehalten wird. Zum Beispiel kann die Betriebstemperatur zwischen 70 °C und 90 °C oder zwischen 80 °C und 90 °C liegen.

Da diese Bauelemente aus einem Stapel vieler einzelner Zellen bestehen, ist es ferner notwendig, eine gleichmäßige Temperaturverteilung in dem Stapel, also über alle Zellen, zu erreichen. Durch das Nassverdampfungsverfahren steht innerhalb der Brennstoffzelle bzw. dem Elektrolyseur an jeder Stelle flüssiges Kältemittel zur Verfügung, dass dort unter Aufnahme der Wärmeenergie verdampfen kann. Somit können Bereiche mit starker Wärmeentwicklung (sogenannte Hotspots) vermieden werden. Gleiches gilt es selbstverständlich für jede andere Wärmequelle, die mit dem Kühlsystem gekühlt wird.

Lediglich beispielhaft kann mindestens 20 % mehr flüssiges Kältemittel in den Verdampfer geleitet werden, als darin verdampft wird. Mit anderen Worten liegt in Strömungsrichtung des Kältemittels stromabwärts des Verdampfers 20 % des (ehemals flüssigen) Kältemittels (weiterhin) in flüssiger Form vor, während das übrige Kältemittel in dem Verdampfer in den gasförmigen Aggregatszustand übergegangen ist.

Um den relativ engen Temperaturbereich der Betriebstemperatur der Wärmequelle (zum Beispiel Brennstoffzelle/Elektrolyse) dauerhaft zu ermöglichen, kann gemäß einer Ausgestaltungsvariante die Steuerung des Kühlsystems ferner dazu eingerichtet sein, Betriebsbedingungen der Wärmequelle, Brennstoffzelle und/oder des Elektrolyseurs zu erfassen, einen Kühlbedarf auf Basis der Betriebsbedingungen zu ermitteln, und das Kühlsystem so zu betreiben, dass der Kühlbedarf der Wärmequelle, der Brennstoffzelle bzw. des Elektrolyseurs gewährleistet ist.

Hierfür kann die Steuerung beispielhaft einen Bedarf an elektrischer Energie, die durch die Brennstoffzelle erzeugt werden soll oder dem Elektrolyseur zur chemischen Spaltung zur Verfügung steht, ermitteln (beispielsweise anhand von angeschlossenen elektrischen Verbrauchern bzw. Stromerzeugungseinrichtungen, wie zum Beispiel Solarzellen). Die elektrische Energie steht in Relation zu der von der Wärmequelle, der Brennstoffzelle bzw. dem Elektrolyseur erzeugten Wärmemenge. Diese Wärmemenge gilt es durch das Kühlsystem aufzunehmen und abzutransportieren.

In einer anderen Ausgestaltungsvariante kann die Steuerung ferner dazu eingerichtet sein, die Fördereinrichtung und/oder den Kondensator so zu steuern, dass die Temperatur des dem Verdampfer zugeführten Kältemittels im Wesentlichen der Temperatur des Verdampfers entspricht. Die Steuerung kann eine Fördermenge des Kältemittels durch die Fördereinrichtung und/oder die Ausgangstemperatur des flüssigen Kältemittels aus dem Kondensator steuern, um die gewünschte Temperatur des Kältemittels, das dem Verdampfer zugeführt wird, zu bestimmen.

So kann in einer Ausgestaltungsvariante die Wärmequelle, Brennstoffzelle und/oder der Elektrolyseur einen Abschnitt aufweisen, der den Verdampfer bildet. Dadurch kann vermieden werden, dass die Wärmequelle, Brennstoffzelle bzw. der Elektrolyseur zu stark abgekühlt wird oder zumindest abschnittsweise abgekühlt wird. Eine solche Abkühlung kann sich beispielsweise auf den Betrieb einzelner Zellen in dem Stapel einer Brennstoffzelle oder Elektrolyseurs auswirken und/oder insgesamt einen negativen Einfluss auf einen effizienten Betrieb der Wärmequelle haben. Durch Annäherung (oder Gleichsetzung) der Temperatur des Kältemittels und des Verdampfers kann die Betriebstemperatur der Wärmequelle, der Brennstoffzelle bzw. des Elektrolyseurs konstant gehalten werden. Eine Kühlung der Wärmequelle, Brennstoffzelle, bzw. des Elektrolyseurs erfolgt dann (nahezu ausschließlich) über die Verdampfungsenthalpie des Kältemittels.

Für gewöhnlich weisen eine Brennstoffzelle und ein Elektrolyseur Kanäle auf, durch die ein Kälteträger geführt wird, um diese zu kühlen. Gemäß mancher der vorliegenden Varianten bilden die Brennstoffzelle bzw. der Elektrolyseur den Verdampfer. Zum Beispiel können die bereits vorhandenen Kühlträgerkanäle von dem Kältemittel des Kühlsystems durchströmt werden und somit den Verdampfer bilden. Dadurch können bestehende Brennstoffzellen bzw. Elektrolyseure mit dem hier beschriebenen Kühlsystem verwendet werden.

Alternativ oder zusätzlich kann das Kühlsystem ferner einen Kühlkreislauf umfassen, der die Wärmequelle mit dem Verdampfer thermisch koppelt. Der Kühlkreislauf kann einen eigenen Kälteträger (Fluid oder anderes Medium zum Transport von Wärmeenergie) aufweisen. Dies hat den Vorteil, den Kälteträger für die Wärmequelle zu optimieren, während das Kältemittel in dem Kühlsystem andere Eigenschaften aufweist, die in der Wärmequelle Nachteile hätten (zum Beispiel elektrische Leitfähigkeit des Kältemittels im Fall einer Brennstoffzelle, eines Elektrolyseurs oder einer anderen elektrisch leitenden Wärmequelle).

Lediglich beispielhaft kann der Kälteträger in einem Wärmerohrs (Heat pipe) eingeschlossen sein, das zwischen dem Verdampfer und der Wärmequelle angeordnet ist. Der Kälteträger sorgt dabei eigenständig für einen Wärmeaustausch zwischen Verdampfer (Kältemittel des Kühlsystems) und der Wärmequelle. Mit anderen Worten findet der Kühlkreislauf in dem Wärmerohr eigenständig statt. Dies ermöglicht eine fluidische Trennung des Kühlsystems und der Wärmequelle.

Alternativ oder zusätzlich kann der Kühlkreislauf eine weitere Fördereinrichtung umfassen, die einen Kälteträger durch Leitungen des Kühlkreislaufs und insbesondere von der Wärmequelle zu dem Verdampfer fördert. Durch die zusätzlichen Leitungen des Kühlkreislaufes können Wärmequelle und Verdampfer des Kühlsystems räumlich getrennt werden.

In einer anderen Implementierungsvariante kann das Kühlsystem ferner eine Bypassleitung umfassen, die an das erste Regelventil angeschlossen ist und dazu eingerichtet ist, gasförmiges Kältemittel von dem ersten Regelventil zu einem stromabwärts des Expanders liegenden Teil des Kühlsystems zu leiten. Das Regelventil kann dabei so ausgestaltet sein, dass es zwischen 0 % und 100 % des gasförmigen Kältemittels dem Expander zuführt, während das übrige gasförmige Kältemittel (100 % bis 0 %) durch die Bypassleitung geleitet wird. Dadurch kann die Ausgangsleistung des Expanders und somit des Generators an bestimmte Lastfälle angepasst werden, zum Beispiel wenn nicht der gesamte erzielbare elektrische Strom verbraucht oder gespeichert werden kann. Auf der anderen Seite kann auch in einer Startphase des Kühlsystems das gasförmige Kältemittel durch die Bypassleitung geleitet werden, um möglichst schnell die notwendigen Betriebsbedingungen des Kühlsystems zu erreichen, und nicht Energie aus dem sich aufbauenden Kältemittelzyklus zu entziehen.

In einer anderen Ausgestaltungsvariante kann das Kühlsystem ferner einen zweiten Sammelbehälter umfassen, der dazu eingerichtet ist, das flüssige Kältemittel aus dem Kondensator zu sammeln. Mit anderen Worten ist der zweite Sammelbehälter stromabwärts des Kondensators mit diesem fluidisch verbunden, sodass in dem Kondensator kondensiertes (nun flüssiges) Kältemittel in den zweiten Sammelbehälter strömt. Der zweite Sammelbehälter dient als Reservoir flüssigen Kältemittels für die Fördereinrichtung, sodass gasförmiges Kältemittel die Fördereinrichtung nicht erreicht, wodurch Schäden an der Fördereinrichtung vermieden werden können.

Zum Beispiel kann die zweite Ableitung den ersten Sammelbehälter mit dem zweiten Sammelbehälter fluidisch verbinden. Die zentrale Aufgabe des zweiten Sammelbehälters ist die Bildung eines Reservoirs flüssigen Kältemittels für den Abschnitt des Kühlsystems bis zum Verdampfer. Daher kann flüssiges Kältemittel, welches in dem ersten Sammelbehälter vom gasförmigen Kältemittel getrennt wird, direkt in den zweiten Sammelbehälter geleitet werden. Die zweite Ableitung bildet somit einen Bypass des Kondensators.

In einer anderen Ausgestaltungsvariante kann das zweite Regelventil an eine weitere Kältemittelleitung angeschlossen sein, die das zweite Regelventil mit dem zweiten Sammelbehälter fluidisch verbindet. Zum Beispiel kann das zweite Regelventil so implementiert sein, dass Kältemittel von der Fördereinrichtung zwischen 0 % und 100 % über die Zuleitung in den Verdampfer geleitet wird, während die entsprechend übrige Menge Kältemittel (zwischen 100% und 0%) von der Fördereinrichtung in den Sammelbehälter geleitet wird. Dadurch können unabhängig von der Geschwindigkeit der Änderung der Fördermenge der Fördereinrichtung die Kältemittelmenge bestimmt werden, die dem Verdampfer zugeleitet wird. Zudem kann die Fördereinrichtung auch konstanter betrieben werden, wodurch diese geschont wird. Insgesamt lässt sich dadurch die Gesamtmenge flüssigen Kältemittels in dem Kühlsystem verringern und die Größe des ersten und/oder zweiten Sammelbehälters optimieren und verringern. Dadurch lässt sich weiter Gewicht einsparen.

In noch einer weiteren Ausgestaltungsvariante kann das Kühlsystem ferner einen Unterkühler umfassen, der dazu eingerichtet ist, Kältemittel stromabwärts des Kondensators und stromaufwärts der Fördereinrichtung zu unterkühlen. Ein Unterkühlen des Kältemittels verhindert Kavitation in der Fördereinrichtung, da das Kältemittel weiter unterhalb seines Siedepunktes gekühlt ist. Zum Beispiel kann der Unterkühler die Temperatur des den Kondensator verlassenden Kältemittels um 2 bis 10 K, vorzugsweise um 5 K, (unterhalb der Ausgangstemperatur am Kondensator oder unterhalb des Siedepunktes) reduzieren.

Ferner kann der Unterkühler in den Kondensator integriert sein, einen Teil des Kondensators bilden oder ein Abschnitt des Kondensators sein. Dadurch können sich der Kondensator und der Unterkühler eine Wärmesenke (zum Beispiel ein kaltes Fluid, kalter Luftstrom, etc.) teilen. Alternativ kann der Unterkühler auch getrennt von dem Kondensator implementiert sein und eine eigene Wärmesenke aufweisen.

In einer weiteren Ausgestaltungsvariante kann das Kühlsystem mindestens einen Drucksensor und/oder Temperatursensor umfassen, der den Druck bzw. die Temperatur des Kältemittels an entsprechender Position in dem Kühlsystem misst. Die Steuerung kann auf die Signale oder Daten des mindestens einen Sensors zurückgreifen, um die Fördereinrichtung, das erste Regelventil und/oder das zweite Regelventil zu steuern.

Lediglich beispielhaft kann der mindestens eine Sensor in dem ersten Sammelbehälter und/oder in dem zweiten Sammelbehälter angeordnet sein. Dadurch kann der Druck und/oder die Temperatur stromabwärts des Verdampfers bzw. stromabwärts des Kondensators bestimmt werden. Ferner sind Brennstoffzellen oder Elektrolyseure bereits mit solchen Sensoren ausgestattet, die mit der Steuerung gekoppelt werden können, um den Druck und/oder die Temperatur des Kältemittels in dem Verdampfer zu bestimmen.

Bei bekanntem Volumen des ersten bzw. zweiten Sammelbehälters (oder des gesamten Kühlsystems) kann die Steuerung aufgrund der Sensorsignale oder -daten und unter Berücksichtigung der thermischen Gesetze das Volumen des flüssigen und/oder gasförmigen Kältemittels bestimmen. Insbesondere bei konstantem Betrieb des Kühlsystems und somit einer im wesentlichen homogenen Temperaturverteilung des Kältemittels innerhalb des Kühlsystems kann die gesamte (flüssige) Menge Kältemittel berechnet werden. Dadurch kann die Steuerung auch dazu eingerichtet sein, ein Leck oder einen Verlust von Kältemittel zu erkennen.

Alternativ oder zusätzlich können auch Füllstandssensoren in dem ersten und/oder dem zweiten Sammelbehälter vorgesehen sein, um die flüssige Kältemittelmenge zu bestimmen.

Ferner kann die Steuerung das Kühlsystem (bzw. seine Komponenten) so steuern, dass der Druck in dem Kühlsystem stromabwärts des Verdampfers ungefähr 3,2 bar beträgt und stromabwärts des Kondensators 2,4 bar beträgt. Die Druckdifferenz zwischen 3,2 und 2,4 bar reicht für gewöhnlich aus, das flüssige Kältemittel von dem ersten Sammelbehälter zu dem Abschnitt des Kühlsystems stromabwärts des Kondensators zu fördern. Ferner reicht diese Druckdifferenz, die auch zwischen dem ersten Sammelbehälter und einem Abschnitt des Kühlsystems stromaufwärts des Kondensators vorliegt, aus, um das Kältemittel nach Austreten aus dem Verdampfer, wo es einen gesättigten Dampf darstellt, in überhitzten Dampf zu wandeln (beispielsweise mithilfe des ersten Regelventils).

In einer Ausgestaltungsvariante kann das Kältemittel R1336mzz(Z), R134a, Methanol oder CO2 (Kohlendioxid) sein. Selbstverständlich kann jedes andere zweiphasige Kältemittel verwendet werden. R1336mzz(Z) eignet sich jedoch insbesondere in einem Kühlsystem mit Brennstoffzelle oder Elektrolyseur als Wärmequelle, wobei diese/dieser bei einer Temperatur von ca. 85 °C optimal betrieben werden, da R1336mzz(Z) bei einem Druck zwischen 2,4 und 3,2 bar und einer Temperatur zwischen 70° C und 90 °C verdampft. Dadurch lässt sich eine optimale Kühlung der Brennstoffzelle oder des Elektrolyseurs bei optimaler Betriebstemperatur erreichen. Zusätzlich ist R1336mzz(Z) elektrisch nichtleitend, sodass es in die Brennstoffzelle oder den Elektrolyseur direkt eingeleitet werden kann.

In einer weiteren Ausgestaltungsvariante kann der Kondensator so betrieben werden (durch die Wärmesenke so gekühlt werden), dass die Druckdifferenz zum Druck des Kältemittels in dem ersten Sammelbehälter ausreicht, um das gasförmige sowie das flüssige Kältemittel zu dem Kondensator bzw. zu dem Abschnitt des Kühlsystems stromabwärts des Kondensators zu fördern und/oder um das gasförmige Kältemittel zu überhitzen. So kann eine Durchflussmenge des kühlenden Mediums der Wärmesenke so gesteuert werden, dass eine gewünschte Kondensatortemperatur und somit Temperaturverlauf des Kältemittels vom Eingang zum Ausgang des Kondensators erzielt wird.

In noch einer weiteren Ausgestaltungsvariante kann das Kühlsystem ein drittes Regelventil umfassen, das in der zweiten Ableitung angeordnet ist und dazu eingerichtet ist, eine Durchflussmenge des flüssigen Kältemittels durch die zweite Ableitung zu regeln. Das dritte Regelventil ermöglicht neben der Regelung der Durchflussmenge (beispielsweise durch die Steuerung) auch eine Regelung des Drucks im ersten Sammelbehälter. Insbesondere in der Startphase des Kühlsystems kann dadurch ein höherer Druck im Verdampfer sowie im Kühlsystem ausgangsseitig des Verdampfers aufgebaut werden.

In einer anderen Ausgestaltungsvariante kann die erste Ableitung oder zumindest ein Abschnitt davon als doppelwandiges Rohr ausgestaltet sein. Dabei kann ein innen liegendes Rohr der ersten Ableitung flüssiges Kältemittel führen, beispielsweise Kältemittel aus der Fördereinrichtung. Zum Beispiel kann das innenliegende Rohr der ersten Ableitung die Zuleitung von der Fördereinrichtung zu dem Verdampfer bilden. In dem außenliegenden Rohr der ersten Ableitung kann gasförmiges Kältemittel von dem Verdampfer bzw. dem ersten Sammelbehälter zu dem Kondensator geführt werden, also die erste Ableitung bilden. Dadurch wird das gasförmige Kältemittel in der ersten Ableitung durch das flüssige Kältemittel erwärmt, wodurch eine Kondensation in der ersten Ableitung verhindert wird.

In noch einer weiteren Ausgestaltungsvariante kann zumindest ein Abschnitt der ersten Ableitung einen festen Strömungswiderstand aufweisen, der so vorgegebenen ist, dass das Kältemittel in dem ersten Sammelbehälter einen höheren Druck aufweist als das Kältemittel in dem stromabwärts des Kondensators liegenden Teil des Kühlsystems. Mit anderen Worten wird anstatt oder zusätzlich zu dem ersten Regelventil die Durchflussmenge des gasförmigen Kältemittels von dem ersten Sammelbehälter zu dem Kondensator durch die erste Ableitung selbst beschränkt, sodass sich in dem ersten Sammelbehälter ein Druck aufbaut. Durch die nun vorliegende Druckdifferenz zwischen dem ersten Sammelbehälter und der Ausgangsseite des Kondensators lässt sich das flüssige Kältemittel von dem ersten Sammelbehälter zu der Ausgangsseite des Kondensators ohne zusätzliche Einrichtungen und/oder ohne Zuhilfenahme der Gravitation befördern.

Zum Beispiel kann die erste Ableitung einen Abschnitt aufweisen, der einen geringeren Durchmesser als andere Leitungen des Kühlsystems, bestimmte strömungshemmende Einbauten und/oder eine in Strömungsrichtung kurze Verengung des Strömungsquerschnitts aufweist. Dadurch kann Gewicht eingespart werden, insbesondere da kein erstes Regelventil notwendig ist. Zudem kann der Steuerungsaufwand reduziert werden. Die Druckdifferenz zwischen erstem Sammelbehälter und Ausgangsseite des Kondensators kann in diesem Fall ausschließlich über die Fördereinrichtung und die geförderte Menge Kältemittel in den Verdampfer gesteuert werden. Insbesondere in Kühlsystemen mit geringem Steuerungsaufwand, zum Beispiel bei einer gleichmäßigen Wärmeerzeugung durch die mit dem Verdampfer zu kühlende Wärmequelle, ist ein konstanter Betrieb des Kühlsystems auch ohne erstes Regelventil möglich.

Gemäß einem weiteren Aspekt zum besseren Verständnis der vorliegenden Offenbarung kann ein Luftfahrzeug einen elektrischen Antrieb und ein Kühlsystem gemäß dem ersten Aspekt (oder einer seiner Ausgestaltungsvarianten und/oder Beispiele) umfassen. Bei dem elektrischen Antrieb kann es sich zum Beispiel um ein elektrisch betriebenes Triebwerk oder einen Motor mit Propeller handeln. Insbesondere kann der durch den Expander angetriebene Generator und gegebenenfalls die Brennstoffzelle des Kühlsystems den elektrischen Antrieb mit elektrischem Strom versorgen. Dadurch kann die Größe der Brennstoffzelle und somit ihr Gewicht verringert werden.

Alternativ oder zusätzlich kann der durch den Generator erzeugte elektrische Strom auch zur Versorgung anderer elektrischer Komponenten in dem Luftfahrzeug verwendet werden. Damit kann eine Brennstoffzelle, Batterie oder andere Energieversorgung in ihrer Größe (und somit ihrem Gewicht) auf den elektrischen Antrieb des Luftfahrzeugs optimiert werden.

Das Luftfahrzeug kann ein Transportflugzeug, Passagierflugzeug, Leichtflugzeug oder ein Pseudosatellit (High Altitude Pseudo Satellite - HAPS) sein. Zum Beispiel kann das Fluggerät durch elektrischen Strom, der in der Brennstoffzelle und dem Generator erzeugt wird, angetrieben werden, oder bestimmte elektrische Komponenten in dem Fluggerät können durch den so erzeugten Strom betrieben werden. Alternativ oder zusätzlich kann das Fluggerät auch einen Elektrolyseur umfassen, der durch das Kühlsystem gekühlt wird. Jegliche Gewichtsersparnis kommt bei einem Fluggerät stark zum Tragen, da weniger Energie für den Antrieb benötigt wird.

Die oben beschriebenen Aspekte, Ausgestaltungen, Varianten und Beispiele können selbstverständlich kombiniert werden, ohne dass dies explizit beschrieben ist. Jede der beschriebenen Ausgestaltungsvarianten und jedes Beispiel sind somit optional zu jedem der Aspekte, Ausgestaltungen, Varianten und Beispielen oder bereits Kombinationen davon zu sehen. Die vorliegende Offenbarung ist somit nicht auf die einzelnen Ausgestaltungen und Ausgestaltungsvarianten in der beschriebenen Reihenfolge oder einer bestimmten Kombination der Aspekte und Ausgestaltungsvarianten beschränkt.

Bevorzugte Ausführungsbeispiele der Erfindung werden nun anhand der beigefügten schematischen Zeichnungen näher erläutert, wobei:
- Figur 1: schematisch eine erste Variante eines Kühlsystems zeigt;
- Figur 2: schematisch eine zweite Variante eines Kühlsystems zeigt;
- Figur 3: schematisch eine dritte Variante eines Kühlsystems zeigt;
- Figur 4: schematisch eine vierte Variante eines Kühlsystems zeigt;
- Figur 5: schematisch eine fünfte Variante eines Kühlsystems zeigt;
- Figur 6: schematisch eine sechste Variante eines Kühlsystems zeigt; und
- Figur 7: schematisch ein Luftfahrzeug zeigt.

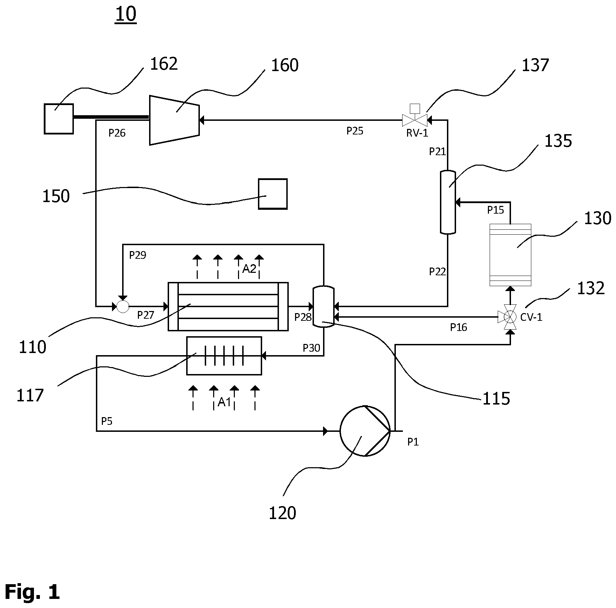

Figur 1 zeigt schematisch eine erste Variante eines Kühlsystems 10, das einen Kondensator 110, einen Verdampfer 130 und eine Fördereinrichtung 120 umfasst. Der Verdampfer 130 ist zum Beispiel über eine Zuleitung P1 mit der Fördereinrichtung 120 verbunden, sodass ein Kältemittel des Kühlsystems 10 von der Fördereinrichtung 120 in den Verdampfer 130 geleitet werden kann. In dem Verdampfer 130 kann das Kältemittel, welches ein zweiphasiges Kältemittel ist, Wärmeenergie aufnehmen, wodurch zumindest ein Teil des Kältemittels verdampft. Im weiteren Verlauf des Kühlsystems 10, der noch näher beschrieben wird, strömt das Kältemittel zu dem Kondensator 110, in dem es gekühlt und kondensiert wird und anschließend in flüssigem Aggregatszustand der Fördereinrichtung 120 wieder zugeführt wird. Hierfür kann der Kondensator 110 mit einer Wärmesenke A2, beispielsweise in Form eines kalten Fluidstroms (Außenluft bei einem Fahrzeug), thermisch gekoppelt sein.

Der Verdampfer 130 ist in der dargestellten Variante in einer Wärmequelle 130 (Brennstoffzelle und/oder Elektrolyseur integriert. Mit anderen Worten weist die Wärmequelle 130 Abschnitte auf, durch die das flüssige Kältemittel strömt und darin zumindest teilweise verdampft. Die Verdampfungsenthalpie wird dabei insbesondere zum Kühlen der Wärmequelle 130 verwendet.

Stromabwärts des Verdampfers 130 (oder darin integriert oder daran angeschlossen) ist ein erster Sammelbehälter 135, der dazu eingerichtet ist das flüssige und gasförmige Kältemittel aus dem Verdampfer 130 zu sammeln und zu trennen. Zum Beispiel ist der erste Sammelbehälter 135 über eine Leitung P15 mit einem Ausgang des Verdampfers 130 fluidisch verbunden.

Das Kühlsystem 10 weist eine erste Ableitung P21 auf, die den ersten Sammelbehälter 135 mit einem stromaufwärts des Kondensators 110 liegenden Teil des Kühlsystems 10 fluidisch verbindet. Dadurch wird gasförmiges Kältemittel aus dem ersten Sammelbehälter 135 abgeleitet und zur Kondensation in den Kondensator 110 geleitet werden. In der ersten Ableitung P21 ist ein erstes Regelventil 137 angeordnet, das dazu eingerichtet ist, eine Durchflussmenge des gasförmigen Kältemittels durch die erste Ableitung P21 zu regeln. Die erste Ableitung wird dabei durch die Leitungsabschnitte P21 und P25 gebildet. Durch das erste Regelventil 137 lässt sich einerseits ein Druckabfall des gasförmigen Kältemittels in der Leitung P25 zum Überhitzen des gasförmigen Kältemittels einstellen/erzielen und andererseits ein Druck in dem ersten Sammelbehälter 135 steuern.

Alternativ kann, gemäß einem nicht unter die Ansprüche fallenden Beispiel, ein Abschnitt der ersten Ableitung, zum Beispiel der Leitungsabschnitt P21 direkt nach dem ersten Sammelbehälter 135, einen festen Strömungswiderstand aufweisen. Der feste Strömungswiderstand kann dabei an das Gesamtsystem angepasst sein, um in dem ersten Sammelbehälter 135 einen höheren Druck aufzubauen als in dem Leitungsabschnitt P25 und ebenso in dem stromabwärts des Kondensators 110 liegenden Teil des Kühlsystems 10. Dadurch könnte auf das erste Regelventil 137 verzichtet werden.

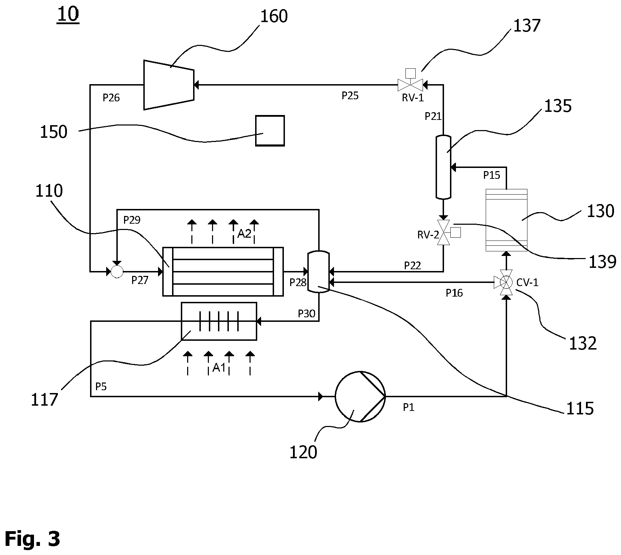

Ferner weist das Kühlsystem 10 in Figur 1 eine zweite Ableitung P22 auf, die den ersten Sammelbehälter 135 mit einem stromabwärts des Kondensators 110 liegenden Teil des Kühlsystems 10 fluidisch verbindet. Durch die zweite Ableitung P22 kann flüssiges Kältemittel aus dem ersten Sammelbehälter 135 abgeleitet werden und dem Kühlsystem in einem Bereich wieder zugeführt werden, der flüssiges Kältemittel führt, also stromabwärts des Kondensators 110. Von dort kann es wieder der Fördereinrichtung 120, zum Beispiel über die Leitungen P30 und P5 zugeführt werden. Das flüssige Kältemittel in der zweiten Ableitung P22 kann ausschließlich aufgrund einer Druckdifferenz zwischen dem ersten Sammelbehälter 135 und dem Abschnitt des Kühlsystems 10 stromabwärts des Kondensators 110 bewirkt werden. Eine zusätzliche Fördereinrichtung ist nicht notwendig. Optional kann ein weiteres Regelventil 139 (Figur 3) in die zweite Ableitung P22 integriert werden, um zum Beispiel die Druckdifferenz (den höheren Druck im ersten Sammelbehälter 135) und/oder einen Füllstand flüssigen Kältemittels in dem Verdampfer 130 schneller aufzubauen.

Figur 1 zeigt zudem einen Expander 160, der stromabwärts des Verdampfers 130 mit dem Verdampfer 130 fluidisch verbunden ist. Der Expander 160 ist in der ersten Ableitung P21, vorzugsweise in dem Abschnitt P25 der ersten Ableitung stromabwärts des ersten Regelventils 137, angeordnet und entspannt gasförmiges Kältemittel aus dem Verdampfer 130. Zum Beispiel kann der Expander 160 in Form einer (Entspannungs-) Turbine, einer mehrstufigen Turbine, einer Wankelmaschine oder einer Kolbenmaschine implementiert sein. Ein gegen Tröpfchen widerstandsfähiger Expander 160 wird zwar bevorzugt, da Kältemitteltröpfchen in dem gasförmigen Kältemittel nicht in allen Betriebsphase des Kühlsystems 10 ausgeschlossen werden können. Jedoch ist ein einfacherer, und damit leichterer, Aufbau des Expanders 160 für ein Luftfahrzeug von Vorteil.

Der Expander 160 wandelt die Energie des gasförmigen Kältemittels beim Entspannen in mechanische Energie um, beispielsweise in eine Drehbewegung. Diese mechanische Energie kann verwendet werden, einen Generator 162 anzutreiben, wodurch dieser elektrischen Strom erzeugt. Zum Beispiel können der Expander 160 und der Generator 162 auf einer gemeinsamen Welle angeordnet sein, wie dies in Figur 1 schematisch dargestellt ist. Die mechanische Energie, die durch den Expander 160 gewonnen werden kann, hängt einerseits von der Druckdifferenz zwischen erstem Sammelbehälter 135 und Eingangsseite des Kondensators 110 und andererseits von einer möglichen Strömungsgeschwindigkeit des gasförmigen Kältemittels in der ersten Ableitung P21, P25 ab.

Schließlich umfasst das Kühlsystem gemäß Figur 1 einen zweiten Sammelbehälter 115, der dazu eingerichtet ist, das flüssige Kältemittel aus dem Kondensator 110 zu sammeln. Dabei kann die zweite Ableitung P22 den ersten Sammelbehälter 135 mit dem zweiten Sammelbehälter 115 fluidisch verbinden. Der zweite Sammelbehälter 115 kann auch in den Kondensator 110 integriert sein oder ein (aufgeweiteter) Abschnitt einer Kältemittelleitung P28, P30 stromabwärts des Kondensators 110 sein.

Für den Fall, dass sich in dem zweiten Sammelbehälter 115 gasförmiges Kältemittel akkumuliert, kann der zweite Sammelbehälter 115 über eine Rückleitung P29 mit einer Eingangsseite des Kondensators 110 fluidisch verbunden sein. Zum Beispiel kann die Rückleitung P29 in einen Leitungsabschnitt P27 des Kühlsystems stromaufwärts des Kondensators 110 münden. Um einen Bypass des Kondensators 110 zu vermeiden, kann am Ende der Rückleitung P29 ein Rückschlagventil vorgesehen sein.

Um zu verhindern, dass gasförmiges Kältemittel in die Fördereinrichtung 120 gelangt, kann in einem Abschnitt des Kühlsystems zwischen Kondensator 110 und Fördereinrichtung 120, beispielsweise zwischen zweitem Sammelbehälter 115 und Fördereinrichtung 120, ein Unterkühler 117 vorgesehen sein. Der Unterkühler 117 kann über eine eigene Wärmesenke A1 (Luftstrom oder anderes kaltes Fluid) als der Kondensator 110 verfügen. Alternativ können sich der Unterkühler 117 und der Kondensator 110 eine Wärmesenke teilen (nicht dargestellt) und/oder der Unterkühler 117 und der Kondensator 110 bilden eine Einheit (nicht gezeigt), sind also ineinander integriert.

Zudem ist in Figur 1 noch ein zweites Regelventil 132 dargestellt, das in der Zuleitung P1, P2 angeordnet ist und dazu eingerichtet ist eine Durchflussmenge des Kältemittels durch die Zuleitung P2 zu regeln. Insbesondere kann das zweite Regelventil 132 die Kältemittelmenge bestimmen, die dem Verdampfer 130 zugeführt wird. Dadurch wird die Kühlleistung des Verdampfers 130 gesteuert, und somit auch der Druck im Verdampfer 130 sowie in den Abschnitten des Kühlsystems 10 stromabwärts des Verdampfers 130.

Optional kann das zweite Regelventil 132 auch einen Abzweig der Zuleitung P1 darstellen und zumindest einen Teil des von der Fördereinrichtung 120 durch die Leitung P1 geförderten Kältemittels über einen Leitungsabschnitt P16 wieder in einen Abschnitt des Kühlsystems 10 stromabwärts des Kondensators 110 leiten. Zum Beispiel kann der Leitungsabschnitt P16 in den zweiten Sammelbehälter 115 münden.

Dadurch kann die Fördereinrichtung 120 kontinuierlich betrieben werden, während über das zweite Regelventil 132 der Zufluss in den Verdampfer 130 gesteuert wird.

Das Kühlsystem 10 verfügt ferner über eine Steuerung 150 (oder Steuereinheit, Prozessor oder Computer), die dazu eingerichtet ist, die Fördereinrichtung 120 und insbesondere deren Fördermenge flüssigen Kältemittels durch die Leitungen P5 und P1 zu steuern. Ferner kann die Steuerung 150 auch das Öffnen und Schließen sowie einen Öffnungsgrad der Regelventile 132, 137 bestimmen und steuern. Auch ist die Steuerung 150 dazu ausgelegt, den Betrieb des Kondensators 110 und/oder des Unterkühlers 117 zu regeln, beispielsweise durch Steuerung der Zufuhr kalten Fluids als Wärmesenke A1, A2.

Ferner kann das Kühlsystem 10 über Sensoren, insbesondere Drucksensoren und Temperatursensoren, verfügen (nicht dargestellt). Mittels der Sensoren kann die Steuerung 150 den Druck und/oder die Temperatur des Kältemittels an dem entsprechenden Abschnitt des Kühlsystems 10 ermitteln und die Fördereinrichtung 120 und/oder Regelventile 132, 137 und/oder Wärmesenken A1, A2 steuern. Die Steuerung 150 ist dabei insbesondere darauf ausgelegt, eine möglichst konstante Temperatur in dem Verdampfer 130 (der Wärmequelle, Brennstoffzelle und/oder dem Elektrolyseur) zu gewährleisten. Zudem lässt sich durch die Steuerung 150 die Druckdifferenz zwischen erstem Sammelbehälter 135 und zweitem Sammelbehälter 115 aufbauen und halten, wodurch ein effizienter Betrieb des Kühlsystems 10 schnell und dauerhaft ermöglicht wird.

Insbesondere kann die Steuerung 150 mithilfe des ersten Regelventils 137 ein Überhitzen des gasförmigen Kältemittels in der ersten Ableitung P21, P25 bewerkstelligen. Abhängig von dem eingesetzten Kältemittel kann ein sehr geringer Druckabfall zwischen Leitung P21 und Leitung P25 bereits zu einem Überhitzen des Kältemittels führen. Der Druckabfall kann sehr gering ausfallen, zum Beispiel zwischen 10 und 1000 mbar, beispielsweise im Fall von Kältemittel, das in einem Bereich zwischen 2 bar und 4 bar in dem Kühlsystem geführt wird. Lediglich als Beispiel kann als Kältemittel R1336mzz(Z) eingesetzt werden, welches in dem Kühlsystem zwischen 2,4 bar und 3 bar betrieben wird.

Lediglich beispielhaft kann die Steuerung 150 verschiedene Prozeduren durchführen, um das Kühlsystem 10 zu starten. So kann zum Beispiel das zweite Regelventil 132 so gesteuert sein, dass nur eine Verbindung zwischen Leitung P1 und Bypass P16 vorhanden ist, während das erste Regelventil 137 geöffnet ist. Nun wird die Wärmesenke A1 des Kondensators 110 in Betrieb genommen, um eine Kühlmitteltemperatur und -druck zum Betrieb des Verdampfers 130 zu ermöglichen. Liegt genügend flüssiges Kältemittel im Abschnitt stromabwärts des Kondensators 110, zum Beispiel in dem zweiten Sammelbehälter 115, vor, startet die Steuerung 150 die Fördereinrichtung 120.

Die Steuerung 150 kann dazu eingerichtet sein, den Kühlungsbedarf des Verdampfers 130 zu bestimmen. Zum Beispiel kann die Steuerung 150 mit Signalen oder Daten versorgt werden, die einen Betriebszustand der zu kühlenden Einrichtung widerspiegelt. Zum Beispiel kann anhand des verbrauchten oder erzeugten Stroms einer Brennstoffzelle bzw. eines Elektrolyseurs ermittelt werden, wie hoch der Kühlbedarf der Brennstoffzelle bzw. des Elektrolyseurs ist. Entsprechend kann die Steuerung das zweite Regelventil 132 so steuern, dass die notwendige Menge flüssigen Kältemittels aus der Leitung P1 in den Verdampfer 130 gelangt. Durch den nun ansteigenden Druck in dem ersten Sammelbehälter 135 kann die Steuerung 150 das erste Regelventil 137 (zumindest teilweise) schließen, um die oben beschriebene Druckdifferenz zwischen erstem und zweitem Sammelbehälter 135, 115 herzustellen.

Hierbei kann die Steuerung 150 den Druck in dem ersten Sammelbehälter 135 und somit in dem Verdampfer 130 auf ein Maximum begrenzen. Zum Beispiel sollte der Druck in einer Brennstoffzelle oder einem Elektrolyseur auf einen bestimmten Wert, beispielhaft 3,5 bar, begrenzt sein, um deren sicheren Betrieb zu gewährleisten. Durch das erste Regelventil 137 ist der Druck in dem Verdampfer 130, aber auch die Menge flüssigen Kältemittels in dem Verdampfer 130, steuerbar. Somit kann ein optimaler Betrieb der Brennstoffzelle oder des Elektrolyseurs gewährleistet werden.

Die Steuerung 150 kann ferner dazu eingerichtet sein, einen Füllstand flüssigen Kältemittels in dem Verdampfer 130 zu berechnen (mittels Druck- und Temperatursensoren) oder zu messen (mittels Füllstandsensor). Ist ein ausreichender Füllstand erreicht, kann die Steuerung 150 den Öffnungsgrad das zweiten Regelventils 132 verkleinern und/oder die Fördermenge der Fördereinrichtung 120 reduzieren. Insbesondere kann die Steuerung 150 den Verdampfer 130 nun im Nassverdampfungsverfahren betreiben.

Ferner ist die Steuerung 150 dazu eingerichtet, den Betrieb des Kondensators 110 und/oder des Unterkühlers 117 zu regeln, um ausreichend flüssiges Kältemittel eingangsseitig (stromaufwärts) der Fördereinrichtung 120 bereitzustellen. Insbesondere die Wärmesenke A1 bzw. A2 kann hier durch die Steuerung 150 geregelt werden, um mehr oder weniger Kältemittel zu kondensieren (zu verflüssigen), und beispielsweise in dem zweiten Sammelbehälter 115 vorzuhalten.

Schließlich kann die Steuerung 150 verhindern, dass die Leitung P25 des Kühlsystems 10, die gasförmiges Kältemittel führt, mit flüssigem Kältemittel geflutet wird. Hierfür kann die Menge flüssigen Kältemittels, das durch die Zuleitung P1 strömt, durch Schließen des zweiten Regelventils 132 gesteuert werden, beispielsweise in den Bypass P16 umgeleitet werden.

In einem weiteren beispielhaften Fall kann die Steuerung 150 auch dazu ausgelegt sein, die zu kühlende Einrichtung (Wärmequelle) zu steuern. Dies ist zum Beispiel notwendig, wenn das Kühlsystem 10 keine ausreichende Kühlleistung in dem Verdampfer 130 erzielen kann. Im Fall einer Leckage des Kältemittels aus dem Kühlsystem 10 oder einer zu hohen Temperatur der Wärmesenke A1, A2 kann es notwendig sein, die Leistung der zu kühlenden Einrichtung und die damit einhergehende erzeugte Wärmemenge zu reduzieren. Insbesondere ist die Steuerung 150 dazu eingerichtet, die Betriebsparameter der zu kühlenden Einrichtung sowie des Kühlsystems 10 zu erfassen und im Vorfeld zu ermitteln, ob eine ausreichende Kühlung der zu kühlenden Einrichtung erfolgen kann oder ob die zu kühlende Einrichtung in ihrer Leistung (Wärmeerzeugung) reduziert werden muss. Hierbei kann die Steuerung 150 den maximal zulässigen Druck in dem Verdampfer 130 sowie minimale Füllstände in dem ersten und/oder zweiten Sammelbehälter 135, 115 sowie in dem Verdampfer 130 berücksichtigen.

Selbstverständlich kann die Steuerung 150 auch die zu kühlende Einrichtung sowie das gesamte Kühlsystem 10 abschalten, um Schäden an der zu kühlenden Einrichtung und/oder dem Kühlsystem 10 zu vermeiden. Hierbei kann die Steuerung 150 dazu eingerichtet sein, dass erste Regelventil 137 zu öffnen, um möglichst viel gasförmiges Kältemittel dem Kondensator 110 zuzuführen. Dadurch kann für einen späteren erneuten Start des Kühlsystems ausreichend flüssiges Kältemittel, zum Beispiel in dem zweiten Sammelbehälter 115, vorgehalten werden.

Für den Fall, dass das Kältemittel stromabwärts der Fördereinrichtung 120 zu kalt ist, um in den Verdampfer 130 geleitet zu werden (beispielsweise kann der Betrieb einer Brennstoffzelle oder eines Elektrolyseurs bei zu starker Kühlung behindert oder gestoppt werden), kann das Kältemittel in der Leitung P1 erwärmt werden. Im einfachsten Fall kann ein gesonderter Heizer (nicht dargestellt) vorgesehen sein, um die optimale Temperatur des Kältemittels für den Verdampfer 130 bereitzustellen.

In jedem Fall ist die Steuerung 150 dazu eingerichtet, über das erste Regelventil 137 gasförmiges Kältemittel durch die erste Ableitung P25 zu dem Expander 160 zu leiten, wenn zum Beispiel eine ausreichende Druckdifferenz zwischen erstem und zweitem Sammelbehälter 135, 115 vorliegt. Je größer die Druckdifferenz, desto mehr Kühlungsbedarf wäre am Kondensator 110 nötig, um das Kältemittel zu verflüssigen und den Druck des Kältemittels dabei zu reduzieren. Da die Druckdifferenz größtenteils durch das Verdampfen des Kältemittels in dem Verdampfer 130 entsteht, kann diese Energie mittels Stromerzeugung durch den Expander 160 und Generator 162 zurückgewonnen werden.

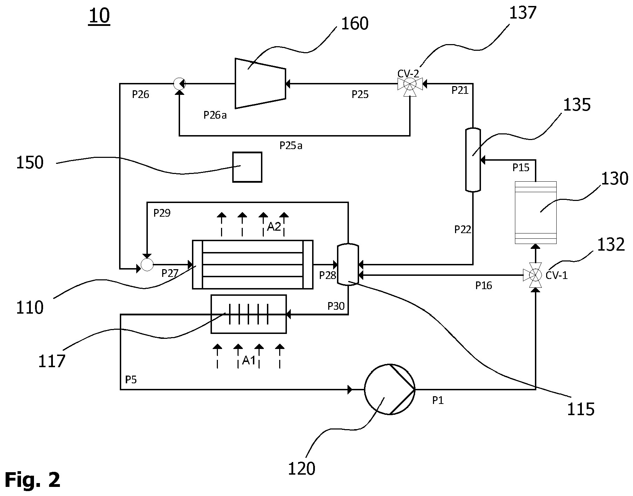

Zur Vereinfachung der Darstellungen der Figuren 2 bis 6 ist der Generator 162 und die gemeinsame Welle mit dem Expander 160 nur in Figur 1 dargestellt.

Eine weitere Variante eines Kühlsystems 10 für eine Wärmequelle 130 ist in Figur 2 dargestellt. Das gezeigte Kühlsystem 10 umfasst eine Vielzahl von Bauelementen, die auch in dem Kühlsystem 10 gemäß Figur 1 umfasst sind, weshalb deren Beschreibung hier nicht wiederholt wird.

In dem Kühlsystem 10 gemäß Figur 2 ist eine Bypassleitung P25a gezeigt, durch die gasförmiges Kältemittel an dem Expander 160 vorbei geleitet werden kann. Zum Beispiel kann das erste Regelventil 137 so eingerichtet sein, dass es zwischen 0 % und 100 % des gasförmigen Kältemittels in die erste Ableitung P25 zu dem Expander 160 leitet und die übrige Menge des gasförmigen Kältemittels (100 % bis 0 %) an dem Expander 160 durch die Bypassleitung P25a vorbeileitet. Dadurch kann zum Beispiel während der Startphase des Kühlsystems 10 das gasförmige Kältemittel direkt zu dem Kondensator 110 geleitet werden.

In der Variante gemäß Figur 3 weist das Kühlsystem 10 ein weiteres Regelventil 139 auf, das in der zweiten Ableitung P22 vorgesehen ist. Das gezeigte Kühlsystem 10 umfasst eine Vielzahl von Bauelementen, die auch in dem Kühlsystem 10 gemäß Figur 1 und 2 umfasst sind, weshalb deren Beschreibung hier nicht wiederholt wird.

Zum Beispiel die Steuerung 150 kann das weitere Regelventil 139 schließen, wenn der Druck in dem ersten Sammelbehälter 135 (noch) nicht hoch genug ist für einen Regelbetrieb des Kühlsystems 10. Ebenso kann die Steuerung 150 das weitere Regelventil 139 schließen, wenn nicht ausreichend flüssiges Kältemittel in dem ersten Sammelbehälter 135 vorhanden ist. Dadurch wird vermieden, dass gasförmiges Kältemittel durch die zweite Ableitung P22 in den Abschnitt des Kühlsystems 10 stromabwärts des Kondensators 110 (beispielsweise in den zweiten Sammelbehälter 115) gelangt.

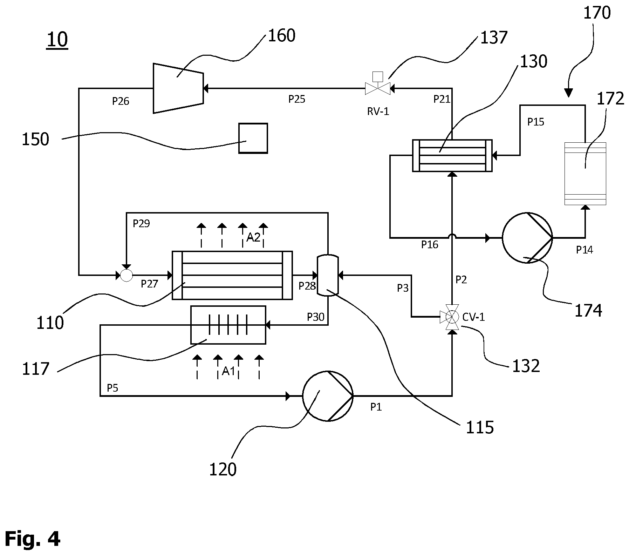

Figur 4 zeigt eine weitere Variante eines Kühlsystems 10, welches jedoch neben dem Nassverdampfungsverfahren auch in einem Trockenverdampfungsverfahren betrieben werden kann. Das gezeigte Kühlsystem 10 umfasst eine Vielzahl von Bauelementen, die auch in dem Kühlsystem 10 gemäß Figuren 1 bis 3 umfasst sind, weshalb deren Beschreibung hier nicht wiederholt wird.

Im Gegensatz zu den Kühlsystemvarianten gemäß den Figuren 1 bis 3 ist in der Variante gemäß Figur 4 der Verdampfer 130 mit der Wärmequelle 172 thermisch gekoppelt. Zum Beispiel weist das Kühlsystem 10 einen Kühlkreislauf 170 auf, der die Wärmequelle 172 mit dem Verdampfer 130 über einen Kälteträger thermisch koppelt. Dabei kann es sich bei dem Kälteträger und dem in dem Kühlsystem 10 verwendeten Kältemittel um unterschiedliche Medien handeln, die auf den Kühlkreislauf 170 bzw. das Kühlsystem 10 optimiert und/oder angepasst sind.

Zum Beispiel kann der Kälteträger in dem Kühlkreislauf 170 ein flüssiger Kälteträger und/oder einphasiger Kälteträger sein. Dieser bewirkt eine einheitliche Temperaturverteilung innerhalb der Wärmequelle 172, da keine Abschnitte der Wärmequelle 172 mit gasförmigem Kälteträger benetzt sind, wodurch Hotspots entstehen könnten.

Ferner kann ein Kältemittel in dem Kühlsystem 10 verwendet werden, welches in dem Verdampfer 130 vollständig verdampft. Mit anderen Worten wird das Kühlsystem 10 und dessen Verdampfer 130 im Trockenverdampfungsverfahren betrieben. Dies ist möglich, da in dem Verdampfer 130 nun keine einheitliche Temperatur (gleichmäßige Temperaturverteilung) herrschen muss, sondern nur in der Wärmequelle 172 mit dem Kälteträger des Kühlkreislaufes 170. Die nun im Kältemittel des Kühlsystems 10 erhöhte Energie aus der Verdampfungsenthalpie kann zu einer größeren Umsetzung in mechanische Energie am Expander 160 und somit zu einer höheren Stromerzeugung genutzt werden.

Das Trockenverdampfungsverfahren ermöglicht ferner, gemäß einem nicht unter die Ansprüche fallenden Beispiel, auf den ersten Sammelbehälter 135 sowie die zweite Ableitung P22 (Figuren 1 bis 3) zu verzichten. Dadurch wird das Kühlsystem leichter.

Ferner kann der Kühlkreislauf 170 eine weitere Fördereinrichtung 174 umfassen, die den Kälteträger durch Leitungen des Kühlkreislaufes 170 und insbesondere von der Wärmequelle 172 zu dem Verdampfer 130 fördert. Alternativ kann der Kälteträger auch durch Erwärmung an der Wärmequelle 172 und Abkühlung an dem Verdampfer 130 ohne Fördereinrichtung 174 bewegt werden.

Diese Variante bietet ferner den Vorteil, dass die Wärmequelle 172 von dem Kühlsystem 10 räumlich weiter entfernt angeordnet werden kann, falls dies notwendig ist.

Bei der Wärmequelle kann es sich ebenfalls um eine Brennstoffzelle, einen Elektrolyseur, eine Batterie, eine elektronische Komponente, einen Motor, eine Gasturbine oder jegliche andere wärmeerzeugende Einrichtung handeln.

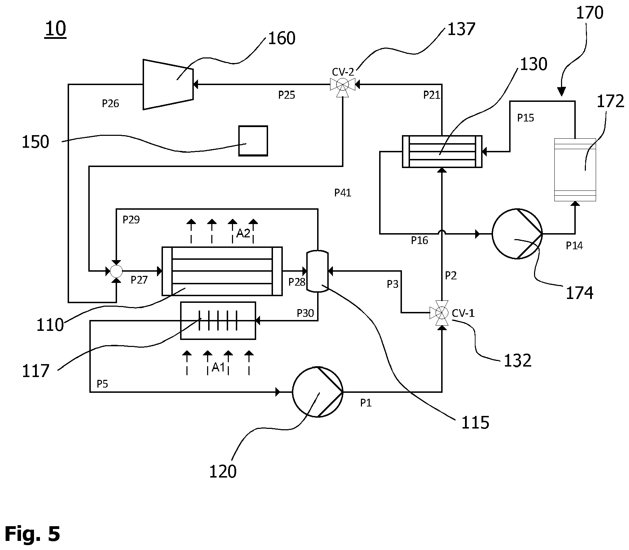

In der Variante gemäß Figur 5 ist eine weitere Bypassleitung P41 dargestellt. Das gezeigte Kühlsystem 10 umfasst eine Vielzahl von Bauelementen, die auch in dem Kühlsystem 10 gemäß Figur 4 umfasst sind, weshalb deren Beschreibung hier nicht wiederholt wird.

Insbesondere ermöglicht diese Variante des Kühlsystems 10, wie auch die Variante gemäß Figur 2, gasförmiges Kältemittel von dem ersten Regelventil 137 direkt zu dem Kondensator 110 durch die Bypassleitung P41 zu führen. Damit kann einerseits der dem Expander 160 und somit dem Generator 162 zur Verfügung stehende Anteil zurückzugewinnender Energie geregelt werden. Andererseits kann gasförmiges Kältemittel direkt über den Kondensator 110 wieder in dem Verdampfer 130 bereitgestellt werden.

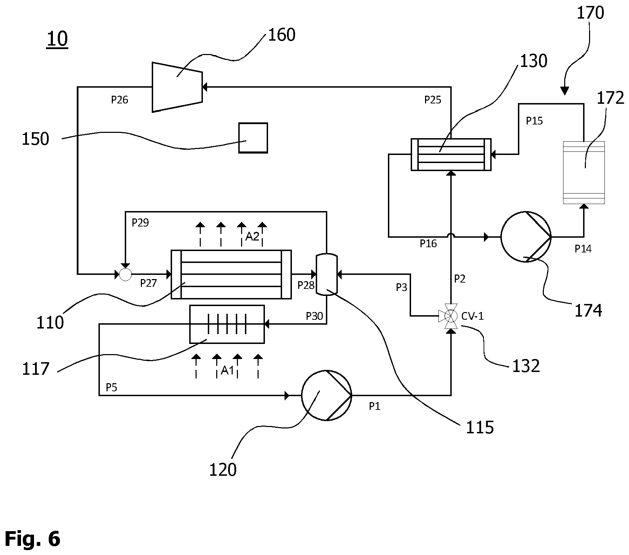

Gemäß der nicht unter die Ansprüche fallenden Variante in Figur 6 kann das Kühlsystem 10 noch weiter vereinfacht werden. Aufgrund des Trockenverdampfungsverfahrens in dem Verdampfer 130 kann auf das erste Regelventil 137 verzichtet werden. Die Steuerung 150 kann beispielsweise lediglich über die Zufuhr flüssigen Kältemittels durch die Zuleitung P1, P2 in den Verdampfer 130 den Kreislauf in dem Kühlsystem 10 regeln, und dabei ausreichend Wärmeenergie aus dem Kühlkreislauf 170 aufnehmen.

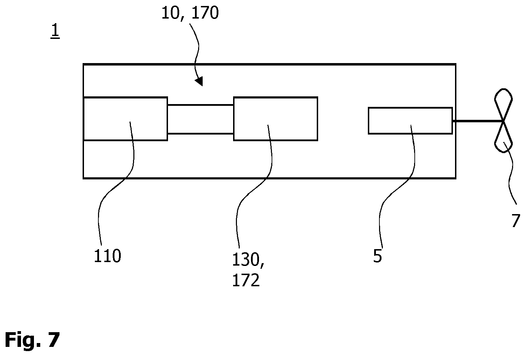

Figur 7 zeigt schematisch ein Luftfahrzeug 1, das zum Beispiel einen elektrischen Antrieb aufweist. Der elektrische Antrieb kann beispielhaft mit einem elektrischen Motor 5 und einem mit einer Motorwelle gekoppelten Propeller 7 implementiert sein. Selbstverständlich können auch andere elektrische Antriebssysteme in dem Luftfahrzeug 1 vorgesehen sein. Das Luftfahrzeug 1 umfasst ferner ein Kühlsystem 10, beispielsweise ein Kühlsystem 10 gemäß einer der Figuren 1 bis 6.

In dem Luftfahrzeug 1 kann eine Brennstoffzelle 130, 172 zur Stromerzeugung vorgesehen sein, die zum Beispiel den elektrischen Motor 5 mit elektrischer Energie versorgt. Die Brennstoffzelle 130, 172 wird durch ein Kühlsystem 10 gekühlt. Beispielsweise kann ein Kühlsystem 10 gemäß einer der Figuren 1 bis 3 zur Kühlung der Brennstoffzelle 130 eingesetzt sein. Alternativ kann die Brennstoffzelle 172 Teil eines Kühlkreislauf 170 sein, wie er zum Beispiel zusammen mit einem Kühlsystem 10 in den Figuren 4 bis 6 gezeigt ist.

Der Kondensator 110 des Kühlsystems 10 kann dabei in dem Luftfahrzeug 1 so angeordnet sein, dass er mit der Umgebung des Luftfahrzeugs 1 (zum Beispiel Luft) thermisch gekoppelt ist. Die Umgebungsluft des Luftfahrzeugs 1 kann somit als Wärmesenke A1 oder A2 verwendet werden.

## Patentansprüche

1. Kühlsystem (10) mit einem zweiphasigen Kältemittel, umfassend:
- einen Kondensator (110), der dazu eingerichtet ist, das zweiphasige Kältemittel zu kühlen und gasförmiges Kältemittel in flüssiges Kältemittel zu überführen;
- einen Verdampfer (130), der in einer Wärmequelle (130, 172) integriert ist oder mit dieser thermisch gekoppelt ist und dazu eingerichtet ist, das zweiphasige Kältemittel zu erwärmen, wobei zumindest ein Teil des Kältemittels zu gasförmigem Kältemittel verdampft;
- eine Fördereinrichtung (120), die dazu eingerichtet ist, das zweiphasige Kältemittel von dem Kondensator (110) zu dem Verdampfer (130) zu fördern;
- einen Generator (162), der dazu eingerichtet ist, Strom zu erzeugen;
- einen Expander (160), der stromabwärts des Verdampfers (130) mit dem Verdampfer (130) fluidisch verbunden ist und dazu eingerichtet ist, das gasförmige Kältemittel aus dem Verdampfer (130) zu entspannen, mechanische Energie zu gewinnen und den Generator (162) anzutreiben,
**gekennzeichnet durch**
- einen ersten Sammelbehälter (135), der dazu eingerichtet ist, das flüssige und gasförmige Kältemittel aus dem Verdampfer (130) zu sammeln;
- eine erste Ableitung (P21), die dazu eingerichtet ist, das gasförmige Kältemittel aus dem ersten Sammelbehälter (135) abzuleiten, und die den ersten Sammelbehälter (135) mit dem Expander (160) fluidisch verbindet;
- ein erstes Regelventil (137), das dazu eingerichtet ist, eine Durchflussmenge des gasförmigen Kältemittels durch die erste Ableitung (P21) zu regeln,
eine Steuerung (150), die dazu eingerichtet ist, das erste Regelventil (137) so zu steuern, dass das dem Expander (160) zugeführte gasförmige Kältemittel überhitzt ist, indem die Steuerung (150) einen Druck des gasförmigen Kältemittels in der ersten Ableitung (P21) stromabwärts des ersten Regelventils (137) hergestellt und aufrechterhält, der ein Kondensieren des gasförmigen Kältemittels verhindert.

2. Kühlsystem (10) gemäß Anspruch 1, ferner umfassend:
- eine Brennstoffzelle (130, 172)
wobei der Verdampfer (130) in der Brennstoffzelle integriert ist oder mit der Brennstoffzelle (172) thermisch gekoppelt ist.

3. Kühlsystem (10) gemäß Anspruch 1 oder 2, ferner umfassend:
- eine zweite Ableitung (P22), die den ersten Sammelbehälter (135) mit einem stromabwärts des Kondensators (110) liegenden Teil des Kühlsystems (10) fluidisch verbindet und die dazu eingerichtet ist, flüssiges Kältemittel aus dem ersten Sammelbehälter (135) abzuleiten.

4. Kühlsystem (10) gemäß einem der Ansprüche 1 bis 3, ferner umfassend:
- eine Zuleitung (P2), die die Fördereinrichtung (120) mit dem Verdampfer (130) fluidisch verbindet; und
- ein zweites Regelventil (132), das in der Zuleitung (P2) angeordnet ist und dazu eingerichtet ist, eine Durchflussmenge des Kältemittels durch die Zuleitung (P2) zu regeln;
wobei die Steuerung (150) dazu eingerichtet ist, das zweite Regelventil (132) so zu steuern, dass der Verdampfer (130) im Nassverdampfungsverfahren betrieben wird, wobei mehr flüssiges Kältemittel in den Verdampfer (130) geleitet wird, als durch eine Wärmezufuhr von der Wärmequelle (130, 172) in dem Verdampfer (130) verdampft wird.

5. Kühlsystem (10) gemäß einem der Ansprüche 1 bis 4, wobei die Steuerung (150) ferner dazu eingerichtet ist, die Fördereinrichtung (120) und/oder den Kondensator (110) so zu steuern, dass die Temperatur des dem Verdampfer (130) zugeführten Kältemittels im Wesentlichen der Temperatur des Verdampfers (130) entspricht.

6. Kühlsystem (10) gemäß einem der Ansprüche 1 bis 5, ferner umfassend:
- eine Bypassleitung (P25a), die an das erste Regelventil (137) angeschlossen ist und dazu eingerichtet ist, gasförmiges Kältemittel von dem ersten Regelventil (137) zu einem stromabwärts des Expanders (160) liegenden Teil des Kühlsystems (10) zu leiten.

7. Kühlsystem (10) gemäß einem der Ansprüche 2 bis 6, wobei die Brennstoffzelle (130, 172) eine reversible Brennstoffzelle (130, 172) und/oder ein Elektrolyseur (130, 172) ist.

8. Kühlsystem (10) gemäß Anspruch 7, wobei die Brennstoffzelle (130, 172) und/oder der Elektrolyseur (130, 172) einen Abschnitt aufweist, der den Verdampfer (130) bildet.

9. Kühlsystem (10) gemäß einem der Ansprüche 1 bis 8, ferner umfassend:
- einen Kühlkreislauf (170), der die Wärmequelle (172) mit dem Verdampfer (130) thermisch koppelt.

10. Kühlsystem (10) gemäß Anspruch 9, wobei der Kühlkreislauf (170) eine weitere Fördereinrichtung (174) umfasst, die einen Kälteträger durch Leitungen des Kühlkreislaufs (170) und insbesondere von der Wärmequelle (172) zu dem Verdampfer (130) fördert.

11. Luftfahrzeug (1), umfassend:
- einen elektrischen Antrieb (5, 7); und
- ein Kühlsystem (10) gemäß einem der Ansprüche 2 bis 10,
wobei der durch den Expander (160) angetriebene Generator (162) und die Brennstoffzelle (130, 172) des Kühlsystems (10) den elektrischen Antrieb (5, 7) mit elektrischem Strom versorgt.

## Claims

1. A cooling system (10) with a two-phase refrigerant, comprising
- a condenser (110) arranged to cool the two-phase refrigerant and to convert gaseous refrigerant into liquid refrigerant;
- an evaporator (130) integrated in or thermally coupled to a heat source (130, 172) and adapted to heat the two-phase refrigerant, whereby at least a portion of the refrigerant vaporises into gaseous refrigerant;
- a conveying device (120) configured to convey the two-phase refrigerant from the condenser (110) to the evaporator (130);
- a generator (162) arranged to generate electricity;
- an expander (160) fluidly connected downstream of the evaporator (130) to the evaporator (130) and arranged to expand the gaseous refrigerant from the evaporator (130), to generate mechanical energy and to drive the generator (162),
**characterised by**
- a first collecting container (135) configured to collect the liquid and gaseous refrigerant from the evaporator (130);
- a first discharge line (P21) arranged to discharge the gaseous refrigerant from the first collecting container (135) and which fluidically connects the first collecting container (135) to the expander (160);
- a first control valve (137) configured to control a flow rate of the gaseous refrigerant through the first discharge line (P21),
a controller (150) configured to control the first control valve (137) such that the gaseous refrigerant supplied to the expander (160) is superheated by the controller (150) establishing and maintaining a pressure of the gaseous refrigerant in the first discharge line (P21) downstream of the first control valve (137) that prevents condensation of the gaseous refrigerant.

2. The cooling system (10) according to claim 1, further comprising:
- a fuel cell (130, 172)
wherein the evaporator (130) is integrated in the fuel cell or is thermally coupled to the fuel cell (172).

3. The cooling system (10) according to claim 1 or 2, further comprising:
- a second discharge line (P22) fluidically connecting the the first header tank (135) to a part of the cooling system (10) located downstream of the condenser (110) and which is adapted to drain liquid refrigerant from the first collecting container (135).

4. The cooling system (10) according to any one of claims 1 to 3, further comprising:
- a supply line (P2) fluidly connecting the conveying device (120) to the evaporator (130); and
- a second control valve (132) arranged in the supply line (P2) and configured to control a flow rate of the refrigerant through the supply line (P2);
wherein the controller (150) is configured to control the second control valve (132) such that the evaporator (130) is operated in a wet evaporation mode, wherein more liquid refrigerant is fed into the evaporator (130) than is evaporated by a heat supply from the heat source (130, 172) in the evaporator (130).

5. The cooling system (10) according to any one of claims 1 to 4, wherein the controller (150) is further configured to control the conveying device (120) and/or the condenser (110) such that the temperature of the refrigerant supplied to the evaporator (130) substantially corresponds to the temperature of the evaporator (130).

6. The cooling system (10) according to any one of claims 1 to 5, further comprising:
- a bypass line (P25a) connected to the first control valve (137) and adapted to conduct gaseous refrigerant from the first control valve (137) to a part of the refrigeration system (10) located downstream of the expander (160).

7. The cooling system (10) according to any one of claims 2 to 6, wherein the fuel cell (130, 172) is a reversible fuel cell (130, 172) and/or an electrolyser (130, 172).

8. The cooling system (10) according to claim 7, wherein the fuel cell (130, 172) and/or the electrolyser (130, 172) comprises a section forming the evaporator (130).

9. The cooling system (10) according to any one of claims 1 to 8, further comprising:
- a cooling circuit (170) thermally coupling the heat source (172) to the evaporator (130).

10. The cooling system (10) according to claim 9, wherein the cooling circuit (170) comprises a further conveying device (174) which conveys a refrigerant agent through lines of the cooling circuit (170) and in particular from the heat source (172) to the evaporator (130).

11. An aircraft (1) comprising:
- an electric drive (5, 7); and
- a cooling system (10) according to any one of claims 2 to 10,
wherein the generator (162) driven by the expander (160) and the fuel cell (130, 172) of the cooling system (10) supply electric power to the electric drive (5, 7).

## Revendications

1. Système de refroidissement (10) avec un réfrigérant diphasique, comprenant:
- un condenseur (110) qui est conçu pour refroidir le réfrigérant diphasique et pour transformer le réfrigérant gazeux en réfrigérant liquide;
- un évaporateur (130) qui est intégré dans une source de chaleur (130, 172) ou couplé thermiquement à cette dernière et conçu pour chauffer le réfrigérant diphasique, au moins une partie du réfrigérant s'évaporant en réfrigérant gazeux;
- un dispositif de transport (120) qui est conçu pour transporter le réfrigérant diphasique du condenseur (110) à l'évaporateur (130);
- un générateur (162) qui est conçu pour produire du courant;
- un détendeur (160) qui est relié fluidiquement à l'évaporateur (130) en aval de l'évaporateur (130) et qui est conçu pour dilater le réfrigérant gazeux provenant de l'évaporateur (130), pour produire de l'énergie mécanique et pour entraîner le générateur (162),
**caractérisé par**
- un premier réservoir collecteur (135) qui est conçu pour collecter le réfrigérant liquide et gazeux provenant de l'évaporateur (130);
- une première conduite d'évacuation (P21) qui est conçue pour évacuer le réfrigérant gazeux provenant du premier réservoir collecteur (135) et qui relie fluidiquement le premier réservoir collecteur (135) au détendeur (160);
- une première vanne de régulation (137) qui est conçue pour réguler un débit du réfrigérant gazeux à travers la première conduite d'évacuation (P21),
une commande (150) qui est conçue pour commander la première vanne de régulation (137) de sorte que le réfrigérant gazeux introduit dans le détendeur (160) soit surchauffé, du fait que la commande (150) produit et maintient une pression du réfrigérant gazeux dans la première conduite d'évacuation (P21) en aval de la première vanne de régulation (137) qui empêche la condensation du réfrigérant gazeux.

2. Système de refroidissement (10) selon la revendication 1, comprenant en outre:
- une pile à combustible (130, 172)
dans lequel l'évaporateur (130) est intégré dans la pile à combustible ou est couplé thermiquement à la pile à combustible (172).

3. Système de refroidissement (10) selon la revendication 1 ou 2, comprenant en outre:
- une deuxième dérivation (P22) qui relie fluidiquement le premier réservoir collecteur (135) à une partie du système de refroidissement (10) située en aval du condenseur (110) et qui est conçue pour évacuer le réfrigérant liquide du premier réservoir collecteur (135).

4. Système de refroidissement (10) selon l'une quelconque des revendications 1 à 3, comprenant en outre:
- une conduite d'alimentation (P2) qui relie fluidiquement le dispositif de transport (120) à l'évaporateur (130); et
- une deuxième vanne de régulation (132) qui est disposée dans la conduite d'alimentation (P2) et qui est conçue pour réguler un débit du réfrigérant à travers la conduite d'alimentation (P2);
dans lequel la commande (150) est conçue pour commander la deuxième vanne de régulation (132) de sorte que l'évaporateur (130) fonctionne selon un procédé d'évaporation par voie humide, une plus grande quantité de réfrigérant liquide étant introduite dans l'évaporateur (130) qu'il n'en est évaporé dans l'évaporateur (130) par un apport de chaleur provenant de la source de chaleur (130, 172).

5. Système de refroidissement (10) selon l'une quelconque des revendications 1 à 4, dans lequel la commande (150) est en outre conçue pour commander le dispositif de transport (120) et/ou le condenseur (110) de telle sorte que la température du réfrigérant introduit dans l'évaporateur (130) corresponde sensiblement à la température de l'évaporateur (130).

6. Système de refroidissement (10) selon l'une quelconque des revendications 1 à 5, comprenant en outre:
- une conduite de dérivation (P25a) qui est raccordée à la première vanne de régulation (137) et qui est conçue pour diriger le réfrigérant gazeux de la première vanne de régulation (137) à une partie du système de refroidissement (10) située en aval du détendeur (160).

7. Système de refroidissement (10) selon l'une quelconque des revendications 2 à 6, dans lequel la pile à combustible (130, 172) est une pile à combustible réversible (130, 172) et/ou un électrolyseur (130, 172).

8. Système de refroidissement (10) selon la revendication 7, dans lequel la pile à combustible (130, 172) et/ou l'électrolyseur (130, 172) comprend une section qui forme l'évaporateur (130).

9. Système de refroidissement (10) selon l'une quelconque des revendications 1 à 8, comprenant en outre:
- un circuit de refroidissement (170) qui couple thermiquement la source de chaleur (172) à l'évaporateur (130).

10. Système de refroidissement (10) selon la revendication 9, dans lequel le circuit de refroidissement (170) comprend un autre dispositif de transport (174) qui transporte un fluide frigoporteur dans des conduites du circuit de refroidissement (170) et en particulier de la source de chaleur (172) à l'évaporateur (130).

11. Aéronef (1), comprenant:
- un entraînement électrique (5, 7); et
- un système de refroidissement (10) selon l'une quelconque des revendications 2 à 10,
dans lequel le générateur (162) entraîné par le détendeur (160) et la pile à combustible (130, 172) du système de refroidissement (10) alimentent l'entraînement électrique (5, 7) en courant électrique.
